# EUROPEAN PATENT APPLICATION

(11) **EP 3 273 403 A1**
(43) Date of publication of application: **24.01.2018**
(21) Application number: 17181803.2
(22) Date of filing: 18.07.2017
(51) Int. Cl.: G06Q 40/00, G06Q 20/32

(54) **AUTOMATED IDENTIFICATION OF AMOUNTS IN TRANSACTIONS FOR TRANSACTION RECORDS**

(30) Priority: 21.07.2016 AU 2016206344
(71) Applicant: Visa International Service Association, San Francisco, California 94128 (US)
(72) Inventor: Roberts, Jarrod, Pascoe Vale South, Victoria 3044 (AU); Scurrah, Michelle, Albert Park, Victoria 3206 (AU); Lamantia, Marco, Ascot Vale, Victoria 3032 (AU); Jones, Anthony, Robert, Avalon Beach, New South Wales 2107 (AU)
(74) Representative: Eisenführ Speiser

(57) **Abstract**

Embodiments of the invention are directed to systems and methods for identifying tax amounts in transactions for association with transaction records. A user may conduct a transaction and receive a receipt for the transaction. The user may use an application running on a portable communication device to view transaction information for their account and select a transaction associated with the receipt. The mobile communication device may identify a total transaction amount and a tax amount for the transaction based on an image of the receipt. The mobile communication device may transmit these amounts to an issuer computer that may associate the tax amount with a record of the transaction. As such, the issuer computer can maintain the tax amounts for the transactions of the user.

## Description

### BACKGROUND

Certain governments, such as the Australian Government, impose a goods and services tax (GST). The governments of Singapore and New Zealand also impose a GST. Businesses may include GST in the purchase price of goods and services in order to collect GST for the government. Businesses may also pay GST when purchasing goods and services. The amount of GST that a business owes to the government may be offset by the amount of GST paid by that business. The government requires businesses to report and pay GST periodically. A business may submit a business activity statement (BAS) to the government in order to report the amounts of GST collected and paid. However, it is difficult and cumbersome for businesses to track paid and collected GST in order to prepare a BAS.

A similar problem exists in other countries that impose a value-added tax (VAT) which is included in the purchase price of goods and services (e.g., Europe). In such countries, businesses may be required to periodically submit a VAT return indicating the amount of VAT that they have collected. Business may also receive a credit for VAT that they have paid. However, it is difficult and cumbersome for businesses to track paid and collected VAT in order to prepare a VAT return.

Embodiments of the invention address these and other problems, individually and collectively.

### BRIEF SUMMARY

Embodiments of the invention are directed to systems and methods for identifying tax amounts in transactions for association with transaction records. One embodiment of the invention is directed to a method. The method includes obtaining, by a communication device, a receipt. The method further includes identifying, by the communication device, a total transaction amount and a tax amount for a transaction conducted using an account from the receipt. The method further includes transmitting, by the communication device, the total transaction amount and the tax amount to an issuer computer of an issuer of the account. The issuer computer associates the tax amount with a record of the transaction stored at the issuer computer.

Another embodiment of the invention is directed to a communication device. The communication device includes a processor and a memory unit coupled to the processor circuit. The memory unit stores computer readable code that, when executed by the processor circuit, causes the processor circuit to obtain a receipt. The code, when executed, further cause the processor to identify a total transaction amount and a tax amount for a transaction conducted using an account from the receipt. The code, when executed, further cause the processor to transmit the total transaction amount and the tax amount to an issuer computer of an issuer of the account. The issuer computer associates the tax amount with a record of the transaction stored at the issuer computer.

Another embodiment of the invention is directed to a method. The method includes storing, by an issuer computer of an issuer of an account, a record of a transaction conducted using the account. The method further includes receiving, by the issuer computer, a total transaction amount and a tax amount for the transaction from a communication device. The total transaction amount and the tax amount are identified by the communication device from a receipt. The method further includes associating, by the issuer computer, the tax amount with the record of the transaction.

Another embodiment of the invention is directed to an issuer computer. The issuer computer includes a processor circuit and a memory unit coupled to the processor circuit. The memory unit stores computer readable code that, when executed by the processor circuit, causes the processor circuit to store a record of a transaction conducted using the account. The code, when executed, further cause the processor to receive a total transaction amount and a tax amount for the transaction from a communication device. The total transaction amount and the tax amount are identified by the communication device from a receipt. The code, when executed, further cause the processor to associate the tax amount with the record of the transaction.

These and other embodiments of the invention are described in further detail below, with reference to the Figures and Detailed Description.

### BRIEF DESCRIPTION OF THE DRAWINGS

FIG. 1 illustrates a block diagram of a transaction processing system that allows a user to conduct a transaction and identify tax information according to an embodiment of the invention.
FIG. 2 shows a block diagram of a mobile communication device according to an embodiment of the invention.
FIG. 3 shows a block diagram of an issuer computer according to an embodiment of the invention.
FIG. 4 shows a flowchart of a method for identifying tax information according to an embodiment of the invention.
FIG. 5 shows a message flow diagram between a mobile communication device and an issuer computer for capturing tax information according to an embodiment of the invention.
FIG. 6 illustrates a user interface of the first showing transaction information and tax information according to an embodiment of the invention.
FIG. 7 illustrates a user interface of the second application capturing transaction information and tax information according to an embodiment of the invention.
FIG. 8 illustrates a user interface of the second application allocating and confirming the transaction information and the tax information according to an embodiment of the invention.
FIG. 9 shows a block diagram of the first application showing the confirmed transaction information and tax information according to an embodiment of the invention

### DETAILED DESCRIPTION

As discussed above, businesses may collect goods and services tax (GST) for the Government by including it in the purchase price of goods and services. Periodically, a business may submit a business activity statement (BAS) to the Government in order to report an amount of GST owned. The amount of GST that a business owes to the Government may be offset by the amount of GST paid by the business (e.g., GST paid when purchasing goods and services from another business).

It may be difficult and cumbersome for businesses to track the amount of GST paid and the collected GST in order to prepare a BAS. One reason for this is that while the amount of GST in Australia is currently set to ten percent of the purchase price, certain goods and services are exempt from GST (e.g., most basic food, some medicines, etc.). Accordingly, the amount of GST for a transaction may not be accurately determined based on the total purchase price. Tracking GST may also be difficult because the amount of GST in the purchase price may not be listed separately on a transaction receipt or tax invoice. In this situation, the amount of GST for the transaction be computed based on a total transaction amount for that transaction (i.e., the purchase price). Preparing the BAS may be cumbersome (especially for sole proprietorships and small business) because it requires businesses to prepare and maintain GST records for every transaction.

Similar problems may also be present for users in countries that implement a value-added tax (VAT) (e.g., Europe). VAT may also be included in the purchase price of goods and services and businesses may be required to periodically submit a VAT return indicating the amount of VAT that they have collected. Business may also receive a credit for VAT that they have paid. However, it is difficult and cumbersome for businesses to accurately track paid and collected VAT in order to prepare a VAT return.

Embodiments of the invention address the problems described above by using a portable communication device to identify a total transaction amount and a tax amount and storing these amounts at an issuer computer. For example, in one exemplary embodiment, a user may conduct a transaction using an account issued to the user by an issuer and receive a receipt for the transaction. The user may use an application running on a portable communication device to receive transaction information for the account from an issuer computer of the issuer. The user may select a transaction and the mobile communication device may capture an image of the receipt and identify a total transaction amount and a tax amount from the image of the receipt. The user may confirm that the total transaction amount and the tax amount match the corresponding amounts on the receipt. The portable communication device including the application may transmit these amounts to the issuer computer along with an identifier of the transaction. The issuer computer may associate the tax amount with a record of the transaction using on the identifier of the transaction. As such, the issuer computer maintains the tax amount for a transaction along with the record of the transaction. This embodiment is advantageous because it the amount of GST may be accurately identified and correctly associated with the corresponding transaction record stored at the issuer computer. Accordingly, the issuer computer may generate the information needed for preparing a business activity statement.

Embodiments of the invention and the advantages that they provide are discussed in further detail below. The following list of terms provides description of certain features in the embodiments.

### I. DESCRIPTION OF TERMS

A " communication device" may comprise any electronic device that provides remote communication capabilities with a network. Examples of remote communication capabilities include using a mobile phone (wireless) network, wireless data network (*e.g.,* 3G, 4G or similar networks), Wi-Fi, Wi-Max, or any other communication medium that may provide access to a network such as the Internet or a private network. A communication device may be a mobile device. Examples of mobile communication devices include mobile phones (*e.g.,* cellular phones), tablet computers, net books, laptop computers, personal music players, hand-held specialized readers, wearable devices (e.g., watches), vehicles (e.g., cars), etc. A communication device may comprise any suitable hardware and software for performing such functions, and may also include multiple devices or components (*e.g.,* when a device has remote access to a network by tethering to another device - *i.e.,* using the other device as a relay - both devices taken together may be considered a single mobile device).

A "server computer" is typically a powerful computer or cluster of computers. For example, the server computer can be a large mainframe, a minicomputer cluster, or a group of servers functioning as a unit. In one example, the server computer may be a database server coupled to a Web server.

A "processor" may refer to any suitable data computation device or devices. A processor may comprise one or more microprocessors working together to accomplish a desired function. The processor may include CPU comprises at least one high-speed data processor adequate to execute program components for executing user and/or system-generated requests. The CPU may be a microprocessor such as AMD's Athlon, Duron, Opteron, Phenom, FX, and/or APU; IBM and/or Motorola's PowerPC; IBM's and Sony's Cell processor; Intel's Celeron, Itanium, Pentium, Xeon, XScale, and/or Corei7; and/or the like processor(s).

A "memory unit" may be any device that can store electronic data. A memory unit may comprise a computer readable storage medium or a non-transitory computer readable medium. The memory unit may store instructions that can be executed by a processor to implement a method. For example, a memory unit may one or more memory chips, a random access memory (RAM) circuit, a read-only memory (ROM) circuit, a magnetic medium such as a hard-disk drive or a floppy disk drive, or an optical medium such as a compact disc.

An "application" may include a computer program, computer code, or computer instructions that are used to implement a certain method. An application may be stored in a memory unit and executed by processor (e.g., of a mobile communication device). An application may present a graphical user interface to a user (e.g., on a display). The user may select certain functions of the mobile communication device to be executed by providing input to the user interface.

A "digital wallet" can include an electronic device or application that allows an individual to conduct electronic commerce transactions. A digital wallet may store user profile information, payment credentials, bank account information, one or more digital wallet identifiers and/or the like and can be used in a variety of transactions, such as but not limited to eCommerce, social networks, money transfer / personal payments, mobile commerce, proximity payments, gaming, and/or the like for retail purchases, digital goods purchases, utility payments, purchasing games or gaming credits from gaming websites, transferring funds between users, and/or the like. A digital wallet may allow the user to load one or more payment cards onto the digital wallet so as to make a payment without having to enter an account number or present a physical card. A digital wallet application may allow the user to view an account statement including information regarding transactions conducted on accounts loaded on the digital wallet.

A "optical character recognition" generally refers to electronic conversion of images of typed, handwritten, or printed text into machine-encoded text, from a scanned document or an image (e.g., picture) of a document. For example, optical character recognition may be used to identify and extract words and numbers in a document (e.g., a receipt).

A "goods and services tax" (GST) generally refers to a compulsory contribution to state revenue, levied by the government, on the sale of goods and services. For example, in Australia, certain businesses add 10% to the purchase price of most goods and services they supply to customers, and then pass this 10% on to the Australian Tax Office. Certain goods and services may not include GST in the purchase price (e.g., they are GST-free). For example, certain basic goods, certain medicines, financial services supplies, certain health services and supplies, etc., may be not include GST.

A "business activity statement" (BAS) generally refers to a statement accounting for GST charged and GST credits claimed. The BAS may be submitted to the government periodically (e.g., monthly, quarterly, or annually). The BAS may indicate a total amount of the sales of a business during an certain period (e.g., a month). The BAS may also indicate the total amount of GST collected for the sales. The BAS may also indicate a total amount of GST paid by the business in purchases by the business (e.g., a GST credit). The BAS may be generated by accounting software.

"Authentication data" may include any data suitable for authenticating a user or mobile device. Authentication data may be obtained from a user or a device that is operated by the user. Examples of authentication data obtained from a user may include PINs (personal identification numbers), passwords, etc. Examples of authentication data that may be obtained from a device may be include device serial numbers, hardware secure element identifiers, device fingerprints, phone numbers, IMEI numbers, etc.

"Access data" may include any suitable data that can be used to access a resource or create data that can access a resource. In some embodiments, access data may be account information for a payment account. Account information may include a primary account number (PAN), payment token, expiration date, verification values (e.g., CVV, CVV2, dCVV, dCVV2), etc. In other embodiments, access data may be data that can be used to activate account data. For example, in some cases, account information may be stored on a mobile device, but may not be activated until specific information is received by the mobile device. This specific information may be characterized as access information in some embodiments. In other embodiments, access data could include data that can be used to access a location. Such information may be ticket information for an event, data to access a building, transit ticket information, etc.

A "transaction record" may include a record of a transaction conducted on an account. The account may have be issued by an issuer and the issuer may keep a record of transactions on the account. The transaction record may include merchant identification information, consumer identification information, the date of the transaction, the time of the transaction, the total amount of the transaction, the amount of tax (e.g., GST) included in the total amount, authorization details for the transaction, and any other suitable information regarding the transaction.

A "deposit record" may include a record of a deposit conducted on an account. The account may be issued to a customer by an issuer and an issuer computer of the issuer may keep a deposit record for deposits made into the account. The deposit record may include customer identification information of the customer, a date of the deposit, a total amount of the deposit, an amount of GST included in the deposit, and any other suitable information regarding the deposit.

An "account statement" may include a summary of transactions that have occurred over a given period on an account held by a person (e.g., a user) or business an institution (e.g., an issuer of the account). The account statement may include a list of transactions and at least a portion of the information included in transaction records for those transactions. An account statement may also include transaction identifiers, information regarding the total transaction amount, the amount of tax paid and/or the amount of tax collected in the transaction.

An "access device" may be any suitable device for obtaining access to a resource. An access device may generally be located in any suitable location, such as at the location of a merchant. An access device may be in any suitable form. Some examples of access devices include POS devices, cellular phones, personal computers (PCs), tablet PCs, hand-held specialized readers, set-top boxes, electronic cash registers (ECRs), automated teller machines (ATMs), virtual cash registers (VCRs), kiosks, security systems, access systems, Websites, and the like. An access device may use any suitable contact or contactless mode of operation to send or receive data from, or associated with, a payment device and/or a user mobile device.

An "acquirer" may typically be a business entity (e.g., a commercial bank) that has a business relationship with a particular merchant or other entity. Some entities can perform both issuer and acquirer functions. Some embodiments may encompass such single entity issuer-acquirers. An acquirer may operate an acquirer computer.

An "authorizing entity" may be an entity that authorizes a request. Examples of an authorizing entity may be an issuer, a governmental agency, a document repository, an access administrator, etc. An "issuer" may typically refer to a business entity (e.g., a bank) that maintains an account for a user. An issuer may also issue payment credentials stored on a user device, such as a cellular telephone, smart card, tablet, or laptop to the consumer.

An "authorization request message" may be an electronic message that is sent to a payment processing network and/or an issuer of a payment card to request authorization for a transaction. An authorization request message according to some embodiments may comply with ISO 8583, which is a standard for systems that exchange electronic transaction information associated with a payment made by a consumer using a payment device or payment account. The authorization request message may include an issuer account identifier that may be associated with a payment device or payment account. An authorization request message may also comprise additional data elements corresponding to "identification information" including, byway of example only: a service code, a CVV (card verification value), a dCVV (dynamic card verification value), an expiration date, etc. An authorization request message may also comprise "transaction information," such as any information associated with a current transaction, such as the transaction amount, merchant identifier, merchant location, etc., as well as any other information that may be utilized in determining whether to identify and/or authorize a transaction.

An "authorization response message" may be an electronic message reply to an authorization request message generated by an issuing financial institution or a payment processing network. The authorization response message may include, by way of example only, one or more of the following status indicators: Approval -- transaction was approved; Declinetransaction was not approved; or Call Center -- response pending more information, merchant must call the toll-free authorization phone number. The authorization response message may also include an authorization code, which may be a code that a credit card issuing bank returns in response to an authorization request message in an electronic message (either directly or through the payment processing network) to the merchant's access device (e.g. POS equipment) that indicates approval of the transaction. The code may serve as proof of authorization. As noted above, in some embodiments, a payment processing network may generate or forward the authorization response message to the merchant.

### II. SYSTEMS

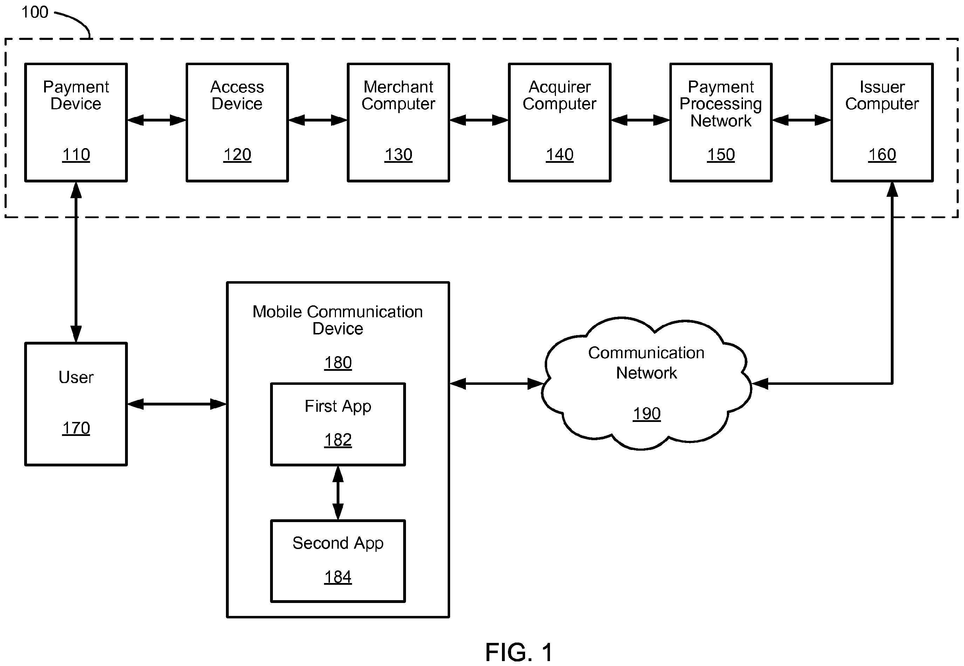

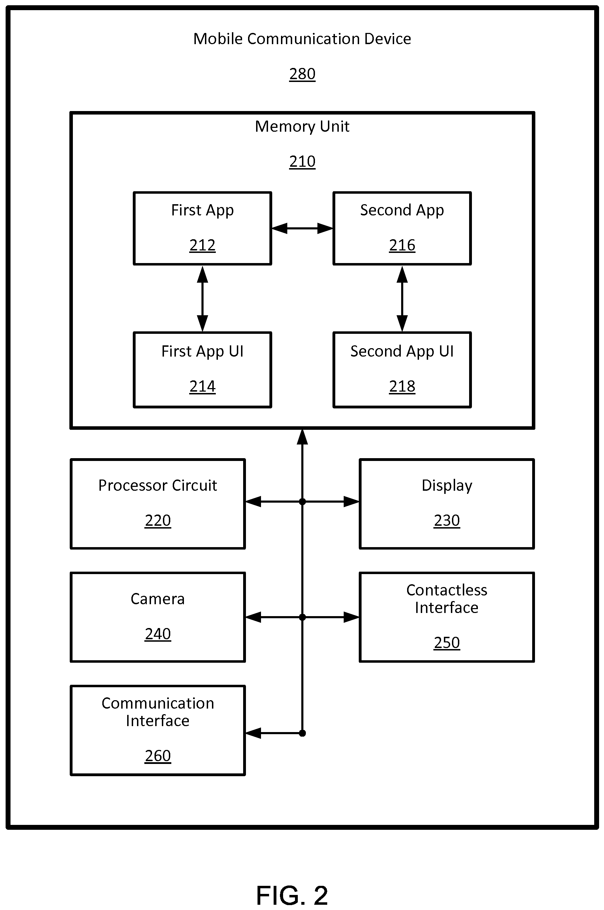

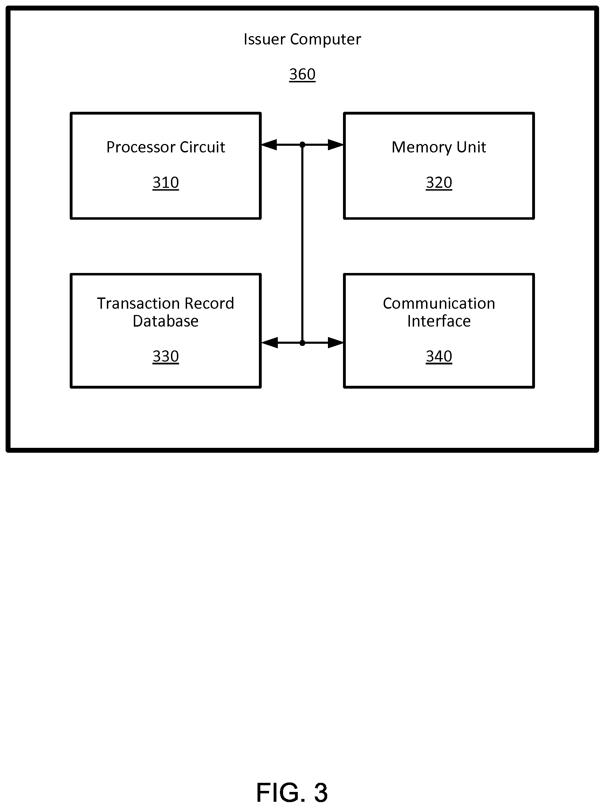

As discussed above, a portable communication device may identify a total transaction amount and a tax amount for a transaction and these amounts may be transmitted to and stored at an issuer computer. FIG. 1 describes a transaction processing system that may be used to conduct a transaction and the mobile communication device that may identify a transaction amount and a tax amount for that transaction. FIGs. 2 and 3 describe the components of the mobile communication device and the issuer computer, respectively, that enable them to perform the functions and operations described herein.

FIG. 1 illustrates a transaction processing system 100 and a mobile communication device 180 according to an embodiment of the invention. A user 170 may operate a payment device 110 used to conduct transactions on an account of the user 170. The payment device 110 may have been provided to the user 170 by an issuer of the account. The user 170 may use the payment device 110 to conduct a transaction at a merchant (e.g., pay for a good or a service). The merchant may operate an access device 120 (e.g., a point of sale terminal) and/or a merchant computer 130 during the performance of the transaction. In order to obtain authorization for the transaction, the merchant computer 130 may communicate with an issuer computer 160 of the issuer via an acquirer computer 140 and a payment processing network 150.

The acquirer computer 140 may be in communication with the payment processing network 150. The acquirer computer 140 may be associated with the merchant computer 130 and may manage authorization requests on behalf of the merchant 130. The acquirer 140 may forward an authorization request from the merchant computer 130 to the payment processing network 150.

The payment processing network 150 may include data processing subsystems, networks, and operations used to support and deliver authorization services, exception file services, and clearing and settlement services. An exemplary payment processing network may include VisaNet™. Payment processing networks are able to process credit card transactions, debit card transactions, and other types of commercial transactions. Certain payment processing networks (e.g., VisaNet™) include a VIP system (e.g., Visa Integrated Payments system) that processes authorization requests and a Base II system which performs clearing and settlement services. The payment processing network may use any suitable wired or wireless network, including the Internet.

To perform a transaction at the access device 120 of the merchant, the user 170 may present the payment device to the access device 120. The payment device 110 and the access device 120 may interact such that access data from the payment device 110 (e.g., a PAN, a payment token, a verification value, an expiration date, etc.) is received by the access device 120 (e.g., via a contact interface or a contactless interface). The merchant computer 130 may receive this information from the access device 120 via an external communication interface. The merchant computer 130 may then generate an authorization request message that includes the information received from the access device 120 (i.e. information corresponding to the payment device 110) along with additional transaction information (*e.g.* a transaction amount, merchant specific information, etc.) and electronically transmits this information to an acquirer computer 140. The acquirer computer 140 may then receive, process, and forward the authorization request message to a payment processing network 150 for authorization.

In general, prior to the occurrence of a credit or debit-card transaction, the payment processing network 150 has an established protocol with the issuer on how the issuer's transactions are to be authorized. In some cases, such as when the transaction amount is below a threshold value, the payment processing network 150 may be configured to authorize the transaction based on information that it has about the user's account without generating and transmitting an authorization request message to the issuer computer 160. In other cases, such as when the transaction amount is above a threshold value, the payment processing network 150 may receive the authorization request message, determine the issuer associated with the payment device 110, and forward the authorization request message for the transaction to the issuer computer 160 for verification and authorization.

Once the transaction is authorized, the issuer computer 160 may generate an authorization response message (that may include an authorization code indicating the transaction is approved or declined) and transmit this electronic message via its external communication interface to payment processing network 150. The payment processing network 150 may then forward the authorization response message to the acquirer computer 140, which in turn may then transmit the electronic message to comprising the authorization indication to the merchant computer 130, and then to the access device 120. Once the transaction is authorized, the merchant may provide the good or the service to the user 170 in exchange for payment from the user's account. The merchant may also provide the user 170 with a receipt for the transaction. The receipt may be a receipt printed on paper or it may be an electronic receipt provided to the user 170 (e.g., via e-mail or SMS). Later, a clearing and settlement process between the merchant computer 130, the acquirer computer 140, the payment processing network 150, and the issuer computer 160 may be performed on the transaction (e.g., at the end of the day or at some other suitable time interval). The issuer computer 160 is described in further detail below with respect to FIG. 3.

The user 170 may also operate a mobile communication device 180. The mobile communication device 180 may be a smartphone or a tablet computer, for example. In some embodiments, the mobile communication device 180 may include the payment device 110. The mobile communication device 180 may communicate with the issuer computer 160 over the communication network 190. The mobile communication device may store and execute a first application (first app) 182. The mobile communication device may also store and execute a second application (second app) 184. In some embodiments, the first application 182 and the second application 184 may be combined into a single application. The mobile communication device 180 is described in further detail below with respect to FIG. 2.

The mobile communication device 180 may store a first application (first app) 182 in a memory unit of the mobile communication device 170. The mobile communication device 180 may execute the first application 182 using a processor of the mobile communication application. For example, the first application 182 may be a digital wallet application. The mobile communication device 180 including first application 182 may communicate with the issuer computer 160 over a communication network 190. The first application 182 may receive an account statement from the issuer computer 160. The account statement may include a plurality of transactions on the account of the user 170 and a transaction amount for each transaction. The account statement may also include a tax amount for each transaction as further described below. The first application 182 may include a first graphical user interface for presenting the plurality of transactions, the corresponding transaction amount, and the corresponding tax amount. The account statement and transaction records for the transactions may be maintained by the issuer computer 160. The first application 182 may communicate with the issuer computer 160 to synchronize the information in the account statement transaction information. The first application 182 is described in further detail below with respect to FIGs. 2, 4-6, and 9.

The mobile communication device 180 may also store a second application (second app) 184 in a memory unit of the mobile communication device 180. The mobile communication device 180 may execute the second application 184 using the processor of the mobile communication application. In some embodiments, the first application 182 and the second application 184 may be combined in a single application. For example, the second application may be an optical character recognition application. The second application 184 may identify characters and numbers in an image. For example, the second application 184 may analyze an image of a receipt and identify a transaction amount and a tax amount from the image of the receipt. The second application 184 may also provide the user 170 with a second user interface for capturing the image of the receipt using a camera of the mobile communication device 180. The second application 184 may also import the image from the memory unit of the communication device 180. The second user interface may also allow the user 170 to modify or confirm the transaction amount and the tax amount identified by the second application 184. The second application 184 is described in further detail below with respect to FIGs. 2, 4, 5, 7, and 8.

FIG. 2 shows a block diagram of a mobile communication device 280 according to an embodiment of the invention. The mobile communication device 180 of FIG. 1 may be configured similar to the mobile communication device 280 of FIG. 2. The mobile communication device 280 of FIG. 2 may be used by the user 170 of FIG. 1.

The mobile communication device 280 may comprise a memory unit 210 (e.g., a memory circuit). The memory unit 210 may be a computer readable storage medium. The memory 210 may be in the form of one or more memory devices (e.g., RAM, EEPROM, ROM chips), using any suitable mode of data storage. In some embodiments, the memory unit 210 may also include a secure storage area for storing sensitive data such as credentials (account numbers, payment tokens, verification values, etc.) and access data. For example, the memory 20 may be part of or may contain a secure element.

The memory unit 210 may store data, computer code, computer instructions, and computer software. The memory unit 210 may store a first application (first app) 212, a first application user interface (first app UI) 214, a second application (second app) 216, and a second application user interface (second app UI) 218. The first application 212 of FIG. 2 may operate similar to the first application 182 of FIG. 1. The second application 216 of FIG. 2 may operate similar to the first application 184 of FIG. 1.

The mobile communication device 280 may also comprise a processor circuit 220. The processor circuit 220 may be an integrated circuit microprocessor. The processor circuit 220 may be operationally coupled to the memory unit 210 and to other components of the mobile communication device 280. The processor 220 may execute (e.g., run) code, instructions, and applications stored on the memory unit 210. The processor circuit 220 may implement the functions and operations of the mobile communication device 280, which are further described herein.

The mobile communication device 280 may also comprise a display 230. The display 230 may be operationally coupled to the processor 220 and the memory unit 210. The display 230 may comprise circuitry and materials for presenting graphics. For example, the display 230 may comprise a light-emitting diode (LED) display, a Liquid crystal display (LCD), or electronic paper (e.g., E Ink). The display 230 may present (e.g., display) the user interface 214 of the first application 212 and the user interface 218 of the second application 216. The use of the display 230 and the graphics presented on the display 230 are further described herein.

The mobile communication device 280 may also comprise a camera 240. The camera 240 may be operationally coupled to the processor 220 and the memory unit 210. The camera 240 may also include one or more optical lenses. The camera 240 may also include circuitry for capturing or recording images based on light that passes through the optical lenses. Images captured by the camera 240 may be stored in the memory unit 210.

The mobile communication device 280 may also comprise a contactless interface 250. The contactless interface 250 may be operationally coupled to the processor 220, the memory unit 210, and other components of the mobile communication device 280. The contactless interface 250 may include a contactless element implemented in the form of a semiconductor chip (or other data storage element) with an associated wireless transfer (e.g., data transmission) element, such as an antenna. The contactless interface 250 may transfer and receive data using short range wireless communication.

The mobile communication device 280 may also comprise a communication interface 260. The communication interface may be operationally coupled to the processor 220, the memory unit 210, and other components of the mobile communication device 280. The communication interface 260 may enable the mobile communication device 280 to transfer and receive data over a wireless network using wireless communications (e.g., Wi-Fi or cellular communications). The communication interface may also enable the mobile communication device 280 to transfer and receive data over a wired network.

FIG. 3 shows a block diagram of an issuer computer 360 according to an embodiment of the invention. The issuer computer 360 may be operated by an issuer. The issuer computer 160 of FIG. 1 may be configured similar to the issuer computer 260 of FIG. 3. The issuer computer 360 of FIG. 3 may be used in the transaction processing system 100 of FIG. 1.

The issuer computer 360 may comprise a processor circuit 310. The processor circuit 310 may be an integrated circuit central processing unit. The processor circuit 310 may be operationally coupled to other components of the issuer computer 360. The processor 310 may execute (e.g., run) code, instructions, and applications stored on a memory unit 320. The processor circuit 310 may implement the functions and operations of the issuer computer 360, which are further described herein.

The issuer computer 360 may also comprise a memory unit 320. The memory unit 320 may be operationally coupled to the processor 310 and other components of the issuer computer 360. The memory unit 320 may be a computer readable storage medium. The memory 320 may be in the form of one or more memory devices (e.g., RAM, EEPROM, ROM chips), using any suitable mode of data storage.

The issuer computer 360 may also comprise a transaction record database 330. The transaction record database may be operationally coupled to the processor 310 and other components of the issuer computer 360. The transaction record database 330 may be a fault tolerant, relational, scalable, secure database (e.g., an Oracle or Sybase database). The transaction record database 330 may be implemented using various data-structures, such as an array, hash, (linked) list, structured text file (e.g., XML), table, and/or the like. Such data-structures may be stored in memory and/or in (structured) files. The transaction record database 330 may store transaction records of transactions authorized by the issuer. The transaction records may include merchant identification information, consumer identification information, the date of the transaction, the time of the transaction, the total amount of the transaction, the amount of tax (e.g., GST) included in the total amount, authorization details for the transaction, and any other suitable information regarding the transaction.

The issuer computer 360 may also comprise a communication interface 340. The communication interface 340 may be operationally coupled to the processor 310 and other components of the issuer computer 360. The communication interface may enable the issuer computer 360 to transfer and receive data over a wired network. The communication interface 340 may also enable the issuer computer 360 to transfer and receive data over a wireless network using wireless communications (e.g., Wi-Fi or cellular communications).

### III. METHODS

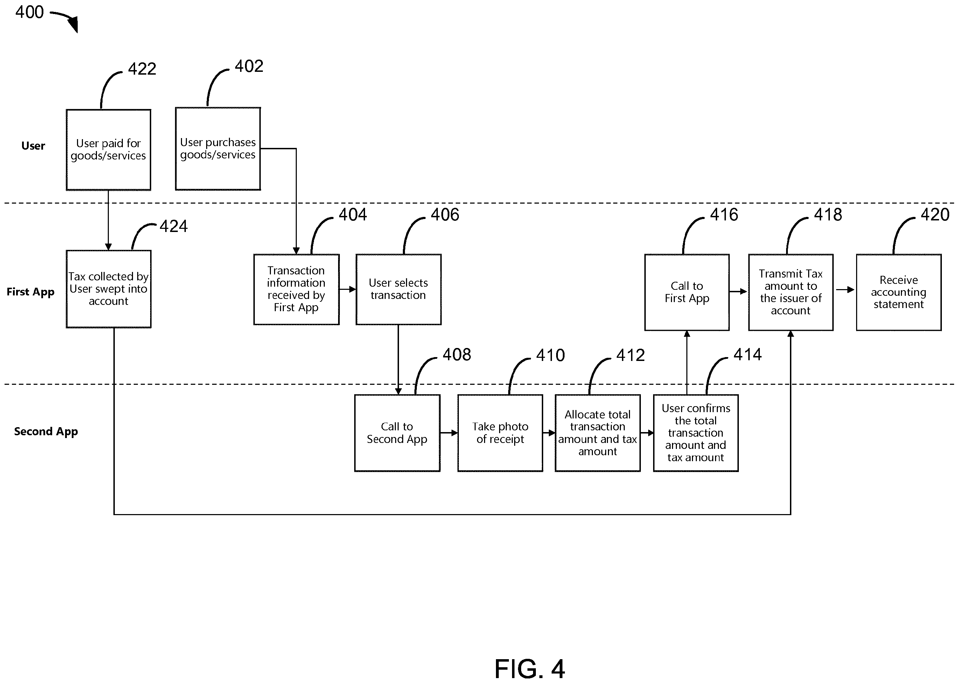

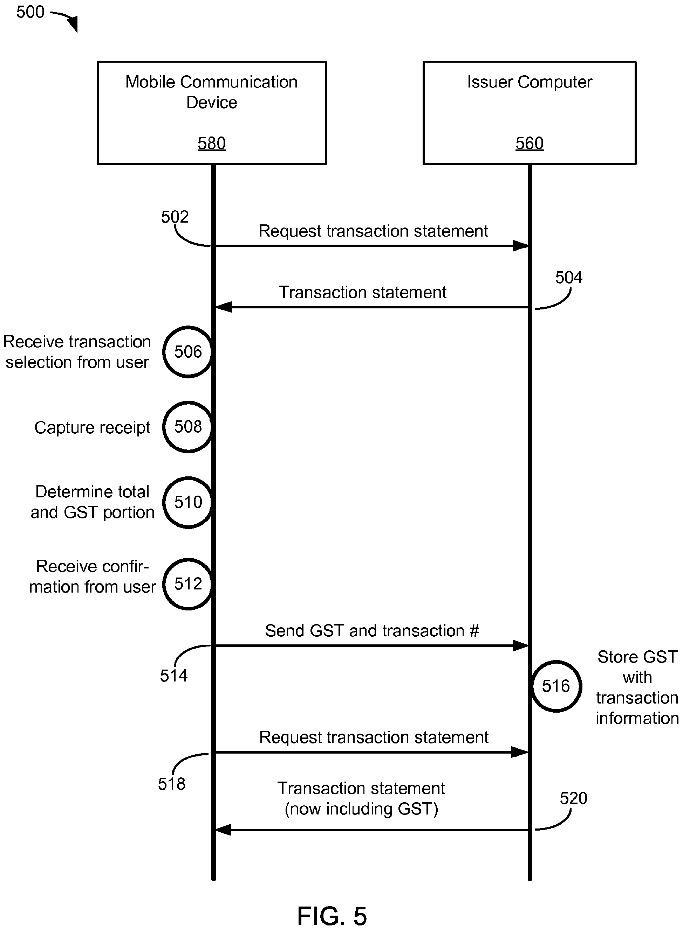

As discussed above, embodiments of the invention provide a portable communication device that may identify a total transaction amount and a tax amount of a transaction, which may be stored at an issuer computer. FIG. 4 provides a flowchart of the steps performed by the first application, the second application, and the issuer computer. FIG. 5 provides a message flow diagram of communications between the mobile communication device and the issuer computer.

FIG. 4 shows a flowchart 400 of a method for identifying and storing tax information according to an embodiment of the invention. The method may be used, for example, by a user that owns and operates a restaurant business. The restaurant may sell prepared meals to customers (see step 422). The purchase price of the prepared meals may include GST. Accordingly, the restaurant may collect GST (see step 424) which will be indicated in a BAS. The restaurant may also purchase goods and service (e.g., cutlery, food preparation equipment, etc.) that include GST in the purchase price (see step 402). The GST paid in the purchase of such goods and services by the restaurant may also be indicated in the BAS. The method shown in FIG. 4 provides a mobile communication device that identifies a total transaction amount and a tax amount, and transmits these amounts to an issuer computer for associating and storing with a transaction record. As such, the method enables the user to receive an accounting statement from the issuer computer for use in efficiently preparing an accurate BAS.

The method 400 may be performed using the mobile communication device 180 of FIG. 1 discussed above. At step 402, the user 170 of the mobile communication device 180 may conduct a first transaction to purchase goods or services (e.g., the user purchases food preparation equipment for their restaurant business). The first transaction may be conducted using the transaction processing system 100 as discussed above with reference to FIG. 1. That is, the user 170 may conduct the first transaction on their account using the payment device 110 and the issuer computer 160 may authorize the first transaction. After the first transaction is conducted, the issuer computer may generate a first transaction record for the first transaction. The first transaction record may include a first transaction identifier and a first total amount for the first transaction.

As discussed above with reference to FIG. 1, the mobile communication device 180 may include the first application 182 and the second application 184. After the first transaction has been conducted, the user 180 may operate the mobile communication device 180 to execute the first application 182.

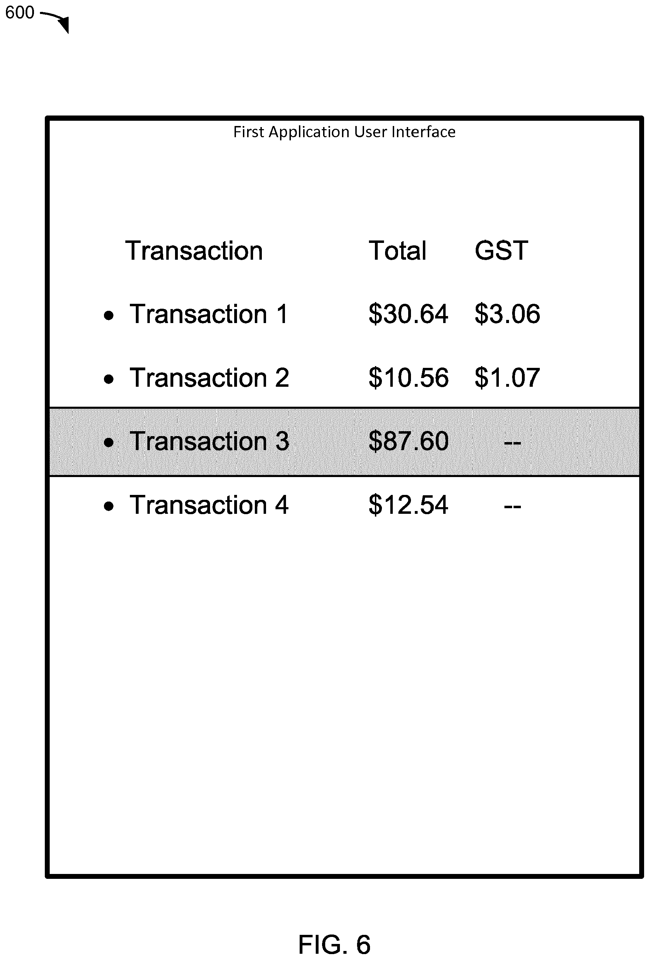

At step 404, the first application 182 may receive transaction information. The transaction information may be received from a computer of an issuer of an account of the user 170 (e.g., the issuer computer 160). The transaction information may include a plurality of transaction records, including the first transaction record of the first transaction. Each transaction record may include a transaction identifier and a total transaction amount. Each transaction record may also include a tax amount. The first application 182 may store the transaction information (e.g., in the memory unit 210). The first application 182 may display the plurality of transaction records to the user 170 (e.g., on the display 230). For example, the first application 182 may display each transaction record of the plurality of transaction records in a user interface of the first application 182 (e.g., as shown in FIG. 6). The first application 182 may display the plurality of transaction records so that they can be reviewed by the user 170. As further described below, the first application 184 may enable the user to select a transaction and input tax information for that transaction.

At step 406, the user 170 may select a transaction. For example, the user 170 may select the transaction by providing input to the user interface of the first application 182 (e.g., by touching the display 230). The user 170 may select the first transaction in order to provide tax information for the first transaction. In response to receiving the selection, the first application 182 may call the second application 184. The first application 182 may call the second application 184 in order to receive tax information.

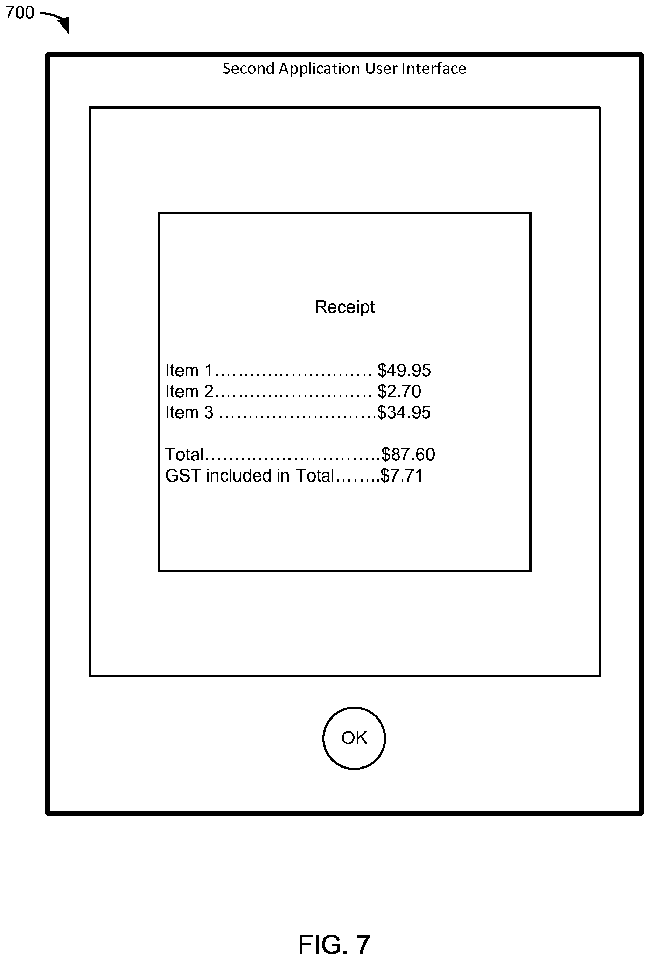

At step 408, the mobile communication device 180 executes the second application 184 in response to receiving the call from the first application 182. As discussed above, the second application 184 may be called to identify a total transaction amount and a tax amount for a transaction. At step 410, the second application 184 may obtain a receipt for the transaction. For example, the second application 184 may cause a camera in the mobile communication device 180 to capture an image of a receipt for the transaction (e.g., using the camera 240). In some embodiments, a graphical user interface of the second application 184 may display a live-view image from the camera 240 (e.g., as shown in FIG. 7) along with a user interface button that that user 170 can operate to capture the current live-view image (e.g., an image of the receipt). In other embodiments, the second application 184 may access a stored image of the receipt or stored text of the receipt (e.g., from the memory unit 210).

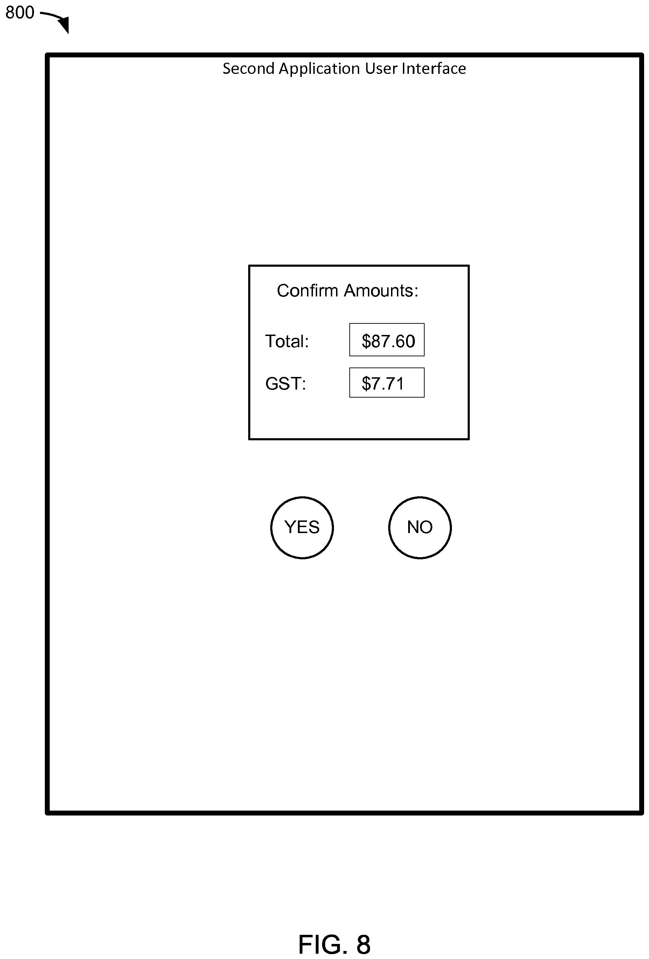

At step 412, the second application 184 may identify a total transaction amount and a tax amount from the receipt. In some embodiments, the second application 184 may identify the tax amount from the receipt but not the total transaction amount. In some embodiments, the second application 184 may identify the total transaction amount by performing optical character recognition on the image of the receipt. In general, optical character recognition refers to methods for converting images to alphanumeric text. The second application 184 may determine the total transaction amount and the tax amount based on the numbers and characters in the receipt. The second application 184 may then display, via the graphical user interface of the second application, the total transaction amount and the tax amount (e.g., as shown in FIG. 8).

At step 414, the second application 184 may prompt the user 170 to confirm that the total transaction amount and the tax amount are correct. The user 170 may compare the receipt itself to the total transaction amount and the tax amount identified by the second application 184. If the total transaction amount and the tax amount identified by the second application 184 matches the total transaction amount and the tax amount on the receipt, then the user 170 may confirm that the total transaction amount and the tax amount identified by the second application 184 are correct. For example, the graphical user interface of the second application may include a "YES" user interface button and a "NO" user interface button (e.g., as shown in FIG. 8) that can be selected by the user 170 in order to confirm (YES) or reject (NO) the total transaction amount and the tax amount identified by the second application 184. The second application 184 may store the total transaction amount and the tax amount (e.g., in the memory unit 210).

The user interface of the second application may enable the user 170 to select the total transaction amount and/or the tax amount for editing. The user interface of the second application may enable the user to modify the total transaction amount and/or the tax amount. For example, if the optical character recognition performed by the second application 184 was inaccurate, the user 170 may modify the total transaction amount and/or the tax amount to match the receipt. Then the user 170 may confirm the modified total transaction amount and/or the modified tax amount.

If the second application 184 receives an input confirming the total transaction amount and the tax amount, then the second application 184 may call the first application 182. If the second application 184 receives an input rejecting the total transaction amount and the tax amount, then the second application 184 may return to step 410 to obtain the receipt again. In other embodiments, if the second application 184 receives an input rejecting the total transaction amount and the tax amount, then the second application 184 may call the first application 182. The second application 184 may include the total transaction amount and the tax amount as parameters in the call to the first application 182. In some embodiments, the second application 184 may only include the tax amount as a parameter in the call to the first application 182.

At step 416, the mobile communication device 180 resumes execution the first application 182 in response to receiving the call from the second application 182. The call back to the first application 182 may include the total transaction amount and the tax amount as parameters in the call to the first application 182. In some embodiments, the call back to the first application 182 may include the tax amount as a parameter, but the call may not include the total transaction amount.

As discussed above with reference to step 406, the user 170 may have selected the first transaction via the user interface of the first application 182. As discussed above with reference to step 404, the first application 182 received a record of the first transaction that includes a transaction identifier and a total transaction amount. The first application 182 may compare the total transaction amount received from the second application 184 with the total transaction amount included in the record of the first transaction. If the total transaction amount received from the second application 184 matches the total transaction amount included in the record of the first transaction, the first application 182 may associate the total transaction amount and the tax amount received from the second application 184 with the record of the first transaction. If the total transaction amount received from the second application 184 does not match the total transaction amount included in the record of the first transaction, the first application 182 may not associate the total transaction amount and the tax amount received from the second application 184 with the record of the first transaction.

At step 418, the first application may transmit the identifier of the first transaction and the total tax amount to the issuer computer 160 (e.g., over the communication network 190). The issuer computer 1670 may identify the first transaction record stored at the issuer computer 160 based on the identifier of the first transaction received from the first application 182. The issuer computer 160 may associate the tax amount received from the first application 181 with the record of the first transaction stored at the issuer computer 160. The issuer computer 160 may include the tax amount in the record of the first transaction. As such, the issuer computer 160 may store transaction records that include tax amounts for each transaction.

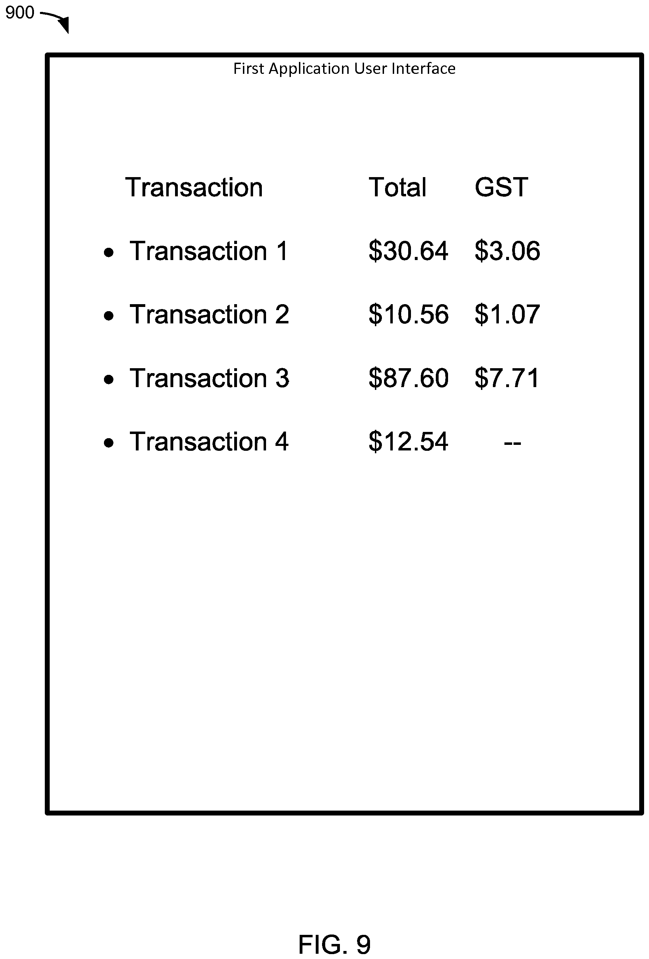

As discussed above with reference to step 404, the first application 182 may receive transaction information from the issuer computer 160. The first application 182 may later receive updated transaction information from the issuer computer 160. The updated transaction information received from the issuer computer 160 may include an updated record of the first transaction. The updated record of the first transaction may include the tax amount for the first transaction (e.g., the tax amount identified by the second application 184). The first application 182 may display the tax amount along with a transaction identifier and the transaction amount in a user interface of the first application (e.g., as shown in FIG. 9).

At step 420, the first application may receive an accounting statement from the issuer computer 160. The issuer computer 160 may generate the accounting statement. The accounting statement may include transaction information including a plurality of transaction records, each record including the tax amount, if available. The account statement may be formatted such that it can be imported into a variety of accounting platforms or software packages (e.g., "Mind Your Own Business" accounting software, Xero accounting software or online platform, Microsoft Excel, PwC software, etc.). The accounting statement may be used to prepare a business activity statement.

At step 422, the user 170 sells goods or services to a consumer in a second transaction and be paid for the goods or services (e.g., the user sells prepared food to customers of their restaurant business). The second transaction may include GST in the purchase price. The sale of goods or services to customers and involve the user 170 totaling the purchase price of the goods or services including a total amount of GST included in the purchase price. As discussed above, some goods or services may not include GST in the purchase price. The user 170 may generate a total purchase price using a merchant computer (e.g., a point of sale terminal or the mobile communication device 180). The consumer may pay the total purchase price, including GST, to the user 170. The user 170 may provide the customer a receipt of the second transaction indicating the total purchase price and the total amount of GST included in the purchase price. In some embodiments, the user 170 may input the total transaction amount of the second transaction and the amount of GST included in the total transaction amount into the mobile communication device 180.

At step 424, a deposit for the second transaction is made into an account of the user 170 and the GST collected by the user 170 in the second transaction is added into the user's account. The account may have been issued to the user 170 by the issuer. The issuer computer 160 of the issuer may generate a deposit record for the second transaction based on the deposit. The process continues to step 418. At 418, the mobile communication device 180 may transmit the total transaction amount of the second transaction and the amount of GST for the second transaction to the issuer computer 180. The issuer computer 180 may include the amount of GST in the deposit record for the second transaction. In some embodiments, the issuer computer 180 may calculate the amount of GST that is included in the total transaction amount for the second transaction based on the total deposit amount.

Accordingly, the issuer computer may store the tax amount for the transactions along with (or included in) the transaction record for the transactions and provide an accounting statement indicant an amount of tax credits (e.g., the amount of GST paid) and the amount of tax owed (e.g., the difference between the amount of GST collected and the amount of GST paid).

FIG. 5 shows a message flow diagram 500 of communications between a mobile communication device 580 and an issuer computer 560 according to an embodiment of the invention. The message flow may enable the mobile communication device 580 to receive a transaction statement from an issuer computer and transmit a total transaction amount and a tax amount to an issuer computer for associating and storing with a transaction record. The mobile communication device 580 may perform similar functions as the mobile communication devices 180, 280 discussed above. The issuer computer 560 may perform similar functions as the issuer computers 160, 360 described above. The mobile communication device 580 and the issuer computer 560 may be part of a transaction processing system similar to the transaction processing system 100 of FIG. 1 discussed above.

Prior to step 502, a user may have conducted one or more transactions as described above with reference to FIG. 1. As discussed above, the user may operate the mobile communication device 580 and the mobile communication device 580 may execute a first application. At step 502, the mobile communication device 580 may transmit a message to the issuer computer 560 including a request for a transaction statement for an account (e.g., an account statement). The issuer computer 560 may receive the message from the mobile communication device 580.

At step 504, the issuer computer 560 may transmit a transaction statement to the mobile communication device 580 in response to receiving the request from the mobile communication device 580. For each transaction conducted on the account, the transaction statement may include transaction identifiers, information regarding the total transaction amount, the amount of tax paid and/or the amount of tax collected in the transaction.

The mobile communication device 580 may receive the transaction statement from the issuer computer 560. The first application of the mobile communication device 580 may display the transaction statement on a user interface of the first application (e.g., via a display of the mobile communication device 580). The user interface of the first application may display information for one or more transactions in the transaction statement. For example, the user interface of the first application may display a transaction identifier, a total transaction amount, and a tax amount for one or more transactions based on the transaction statement.

At step 506, the mobile communication device 580 may receive a selection of a transaction from the user. For example, a user may touch a portion of the display that is displaying transaction information for a certain transaction in order to select that transaction. The user may select the transaction in order to add or modify the GST amount for that transaction. If the user has not previously identified GST information for that transaction, the GST amount may not be present (e.g., it may be blank). The selected transaction may be identified by its transaction identifier. An exemplary user interface for displaying the transaction statement is described below with reference to FIG. 6.

At step 508, the mobile communication device 580 may capture an image of the receipt for the transaction as described above with reference to FIGs. 1 and 4. The user may capture a receipt received when they previously conducted the transaction corresponding to transaction that they selected in the user interface of the first application. The user may capture the image of the receipt using the second application as described above. An exemplary user interface for capturing an image of a receipt is described below with reference to FIG. 7.

At step 510, the mobile communication device 580 may identify and determine the total transaction amount and the tax (e.g., GST) amount from the receipt as described above with reference to FIGs. 1 and 4. At step 512, the mobile communication 580 may receive confirmation from the user that the total transaction amount and the tax amount identified by the mobile communication device match the corresponding amounts on the receipt. An exemplary user interface for displaying and confirming the total transaction amount and the tax amount is described below with reference to FIG. 8.

At step 514, the mobile communication device 580 may transmit a message including the transaction identifier for the selected transaction, the total transaction amount, and the tax amount to the issuer computer 560 as discussed above. At step 516, the issuer computer 560 may identify a transaction record associated with the transaction identifier received from the mobile communication device 580. The issuer computer 560 may then associate the tax information for that transaction with the record of the transaction. The tax information may also be included in the record of the transaction. The issuer computer may store the updated transaction record including the tax amount (e.g., in the transaction record database 330).

At step 518, the mobile communication 580 may transmit a message to the issuer computer 560 include a request for a transaction statement. In some embodiments, the issuer computer 560 may send a transaction statement to the mobile communication device 580 in response to associating tax information with a record of the transaction, without receiving a request from the mobile communication device 580.

At step 520, the issuer computer 560 may transmit an updated transaction statement to the mobile communication device 580 in response to receiving the request from the mobile communication device 580. The updated transaction response may include the tax amount received from the mobile communication device 580 in the message received at step 504. An exemplary user interface for displaying the updated transaction statement is described below with reference to FIG. 9.

### IV. EXEMPLARY APPLICATION USER INTERFACE

As discussed above, embodiments of the invention provide a portable communication device including a first application and a second application that may identify a total transaction amount and a tax amount of a transaction. FIGs. 6-9 provide examples of user interfaces for displaying a transaction statement with selectable transactions, capturing an image of a receipt, displaying and confirming the total transaction amount and the tax amount, and displaying the updated transaction statement.

FIG. 6 illustrates a user interface 600 of the first application showing transaction information and tax information according to an embodiment of the invention. The user interface 600 may be used in the first application of the mobile communication device described above with reference to FIGs. 1, 2, 4 and 5. As shown in FIG. 6, the user interface 600 may display a list of transactions from a transaction statement. The user interface 600 may display a transaction identifier (e.g., "transaction 1," "transaction 2," etc.). In other embodiments, the transaction identifiers be a unique number for the account's transactions. In other embodiments, the transaction identifiers may include numbers and characters (e.g., an identifier of the merchant where the transaction was conducted). The user interface 600 may also display a total transaction amount and a tax amount (e.g., GST amount) for each transaction. The tax amount for certain transaction may not be available. The user interface 600 may indicate that the tax amount is not available using a dash (--) or by a blank space.

The user interface 600 may enable a user the touch a portion of the transaction being displayed in order to selected that transaction. The transaction may also be selected using key inputs from the user, or in another manner. For example, the user may select the transaction identified as "Transaction 3." As shown in FIG. 6, the user interface 600 may highlight the selected transaction in order to indicate which the transaction has been selected. In response to the user selecting a transaction, the first application may call the second application as discussed above with reference to FIG. 4. In response to the call, the display of the mobile communication device may display the user interface of the second application shown in FIG. 7.

FIG. 7 illustrates a user interface 700 of the second application capturing transaction information and tax information according to an embodiment of the invention. The user interface 700 may be used in the second application of the mobile communication device described above with reference to FIGs. 1, 2, 4 and 5. As shown in FIG. 7, the user interface 700 may show a live-image of a camera of the receipt. For example the user may position the mobile communication device such that the camera of the mobile communication device may view the receipt.

An exemplary receipt is shown in FIG. 7. The receipt may be for a transaction for the sale of item 1, item 2, and item 3. The purchase price of item 1 is $49.95, the purchase price of item 2 is $2.70, and the purchase price of item 3 is $34.95. Accordingly, the total transaction amount is $87.60. As discussed above, business may include GST in the purchase price of goods and services. Typically, GST is set to 10% of the purchase price for a good or service. However, as discussed above, some goods and services are exempt from GST. For example, item 2 may be a bottle of water, which may be exempt from GST. Thus, the purchase price of $2.70 for item 2 may not include any GST. The purchase price of item 1 may include $4.54 of GST. The purchase price of item 3 may include $3.17 of GST. Thus, the amount of GST included in the total transaction amount is $7.71.

Certain receipt may not show the amount of GST included in the total transaction amount if all goods or services shown in the receipt include GST. If item 1, item 2, and item 3 each included GST in their purchase price, then the second application may compute the tax amount based on the purchase price. In this situation, the tax amount would be $7.96 ($87.60 / 11) instead of $7.71. The second application may identify and compute the total transaction amount and the tax amount (e.g., GST amount) for different formats of receipts, including receipts that do not indicate the amount of GST included in the total purchase price.

For example, item 1, item 2, and item 3 may each include GST in their purchase price. A second receipt (not shown) for those items may indicate that purchase price of item 1 is $49.95, that the purchase price of item 2 is $2.70, and that the purchase price of item 3 is $34.95. Accordingly, the total transaction amount for these items is $87.60. The second receipt may also indicate that the tax amount is $7.96. In this second example, the total purchase price of item 2 including GST remains the same, but the purchase price excluding GST is less. Since item 2 now includes GST in its purchase price but maintains the total purchase price of $2.70, the total amount of GST in the total purchase price increases from $7.71 to $7.96. The first application 182 and the second application 184 may process the second receipt in a similar manner as described herein with reference to FIGs. 6-9.

The user interface 700 may also include a button (e.g., an "OK" button) that allows the user to capture the image displayed in the user interface 700 (e.g., an image of the receipt). In response to capturing the image, the second application may identify the total transaction amount and the tax amount from the receipt as discussed above with reference to FIG. 4. In response to identifying the transaction amount and the tax amount, the second application may display the user interface shown in FIG. 8.

FIG. 8 illustrates a user interface 800 of the second application identifying and confirming the transaction information and the tax information according to an embodiment of the invention. The user interface 800 may be used in the second application of the mobile communication device described above with reference to FIGs. 1, 2, 4 and 5. The user interface 800 may display the total transaction amount ($87.60) and the tax amount ($7.71) identified by the second application based on the image of the receipt. The user interface 800 may also include buttons to confirm ("YES") or reject ("NO) the total transaction amount and the tax amount as described above. The user interface 800 may also enable the user to select the total transaction amount and/or the tax amount in order to adjust or change these amounts. If the user rejects the amounts, the second application may return to the user interface 700 of FIG. 7, or it may return to the user interface 600 of the first application. In response to the user confirming the transaction amount and the tax amount, the second application may call the first application, the call including the total transaction amount and the tax amount, as described above. In response to calling the first application, the mobile communication device may display the user interface shown in FIG. 9.

FIG. 9 illustrates a user interface 900 of the first application showing updated transaction information and tax information according to an embodiment of the invention. The user interface 900 may be used in the first application of the mobile communication device described above with reference to FIGs. 1, 2, 4 and 5. As discussed above with reference to FIGs. 4 and 5, the first application may transmit the total transaction amount and the tax amount to the issuer computer and the issuer computer may associate the tax amount with a transaction record for the selected transaction. The issuer computer may provide the first application with an updated transaction statement as discussed above. The user interface 900 shows an updated transaction information based on the updated transaction statement. As discussed above with reference to FIGs. 7 and 8, the tax amount for transaction 3 may be $7.71. Accordingly, the user interface 900 shows a tax amount of $7.71 for transaction 3.

### V. ADVANTAGES OF THE INVENTION

Embodiments of the invention provide a number of improvements and advantages. One advantage of the invention is that it provides for more efficient creation of accurate business activity statements. By maintaining GST information at the issuer computer, the issuer computer may generate and provide accounting statements to businesses for use in preparing a business activity statement. Preparing a BAS based on an accounting statement generated by the issuer, according to embodiments of the invention, may be more accurate and reliable compared to preparing a BAS based on separately maintained tax information and records.

As discussed above, GST information may be transmitted to the issuer computer, which associates the tax amounts with transaction records. It is more accurate to associate the tax amount with the record of the transaction compared to maintaining tax amounts separate from the transactions associated with those amounts since the tax amount may be verified against the rest of the transaction record and stored with the transaction record. In addition, it is advantageous to maintain the GST information at the issuer computer compared to a business maintaining their own GST information (e.g., on the mobile communication device, on a separate computer, or on paper). Maintaining GST information on the Issuer computer provides improved security and reliability (e.g., the issuer computer has more secure and reliable storage using a database and more secure network access compared to the mobile communication device).

As discussed above, the portable communication device may receive a transaction statement from the issuer computer, the user may select a specific transaction from the user interface of the first application, and the user may capture an image of a receipt for that transaction. Embodiments of the invention provide advantages by enabling the user to correctly select which receipt corresponds to which transaction. This may be useful where the account includes transactions having the same total transaction amount but different tax amounts. Enabling the user to select a specific transaction may also be useful where an account includes transaction made by multiple individuals (e.g., the account is a business or corporate account) since the user may identify which transaction they conducted. As such, embodiments of the invention provide improvements over systems that automatically calculate GST without receiving a selection from the user.

Another advantage is that the GST identification and tracking provided by embodiments of the invention is more accurate compared to system that identify GST based on the total purchase price. As discussed above, certain items are exempt from GST and thus, calculations based on the total purchase price alone may not be accurate. In addition, embodiments of the invention allow the user to modify and confirm the tax amount for the transaction, ensuring that the tax amount identified by the mobile communication device is accurate.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application may be implemented as software code to be executed by a processor using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may reside on or within a single computational apparatus, and may be present on or within different computational apparatuses within a system or network.

While certain exemplary embodiments have been described in detail and shown in the accompanying drawings, it is to be understood that such embodiments are merely illustrative of and not intended to be restrictive of the broad invention, and that this invention is not to be limited to the specific arrangements and constructions shown and described, since various other modifications may occur to those with ordinary skill in the art.

As used herein, the use of "a", "an" or "the" is intended to mean "at least one," unless specifically indicated to the contrary.

### It follows a list of further embodiments of the invention:

Embodiment 1 A method, comprising:
obtaining, by a communication device, a receipt; identifying, by the communication device, a total transaction amount and a tax amount for a transaction conducted using an account from the receipt; and
transmitting, by the communication device, the total transaction amount and the tax amount to an issuer computer of an issuer of the account, wherein the issuer computer associates the tax amount with a record of the transaction stored at the issuer computer.

Embodiment 2 The method of embodiment 1, wherein obtaining the receipt comprises capturing, using a camera, an image of the receipt, wherein the obtained receipt comprises the image of the receipt, and wherein the identifying of the total transaction amount and the tax amount is based on the image of the receipt.

Embodiment 3 The method of embodiment 1, further comprising:
receiving, by the communication device, a selection of the transaction; identifying, by the communication device, a transaction identifier for the transaction; and transmitting, by the communication device, the transaction identifier to the issuer computer, wherein the issuer computer associates the tax amount with the record of the transaction based on the transaction identifier.

Embodiment 4 The method of embodiment 1, further comprising receiving, by the communication device, confirmation of the tax amount from a user of the communication device via a user interface, wherein the transmitting of the total transaction amount and the tax amount is based on the receiving of the confirmation.

Embodiment 5 The method of embodiment 1, further comprising receiving, by the communication device, the record of the transaction and the tax amount from the issuer computer, the tax amount being associated with the record of the transaction.

Embodiment 6 The method of embodiment 1, wherein the issuer computer generates an accounting statement based on the tax amount.

Embodiment 7 A communication device, comprising:
a processor circuit; and
a memory unit coupled to the processor circuit and storing computer readable code that, when executed by the processor circuit, causes the processor circuit to:
   obtain a receipt,
   identify a total transaction amount and a tax amount for a transaction conducted using an account from the receipt, and
   transmit the total transaction amount and the tax amount to an issuer computer of an issuer of the account, wherein the issuer computer associates the tax amount with a record of the transaction stored at the issuer computer.

Embodiment 8 The device of embodiment 7, wherein the communication device further comprises a camera, and wherein the code that causes the processor circuit to obtain a receipt includes code that causes the camera to capture an image of the receipt, wherein the obtained receipt comprises the image of the receipt, and wherein the identification of the total transaction amount and the tax amount is based on the image of the receipt.

Embodiment 9 The device of embodiment 7, wherein the code, when executed by the processor circuit, further cause the processor circuit to:
receive a selection of the transaction,
identify a transaction identifier for the transaction, and
transmit the transaction identifier to the issuer computer, wherein the issuer computer associates the tax amount with the record of the transaction based on the transaction identifier.

Embodiment 10 The device of embodiment 7, wherein the code, when executed by the processor circuit, further cause the processor circuit to receive confirmation of the tax amount from a user of the communication device via a user interface, wherein the transmission of the total transaction amount and the tax amount is based on the receiving of the confirmation.

Embodiment 11 The device of embodiment 7, wherein the code, when executed by the processor circuit, further cause the processor circuit to receive the record of the transaction and the tax amount from the issuer computer, the tax amount being associated with the record of the transaction.

Embodiment 12 The device of embodiment 7, wherein the code, when executed by the processor circuit, further cause the processor circuit to receive an accounting statement from the issuer computer, wherein the accounting statement is generated by issuer computer based on the tax amount.

Embodiment 13 A method, comprising:
storing, by an issuer computer of an issuer of an account, a record of a transaction conducted using the account;
receiving, by the issuer computer, a total transaction amount and a tax amount for the transaction from a communication device, wherein the communication device identified the total transaction amount and the tax amount from a receipt; and
associating, by the issuer computer, the tax amount with the record of the transaction.

Embodiment 14 The method of embodiment 13, wherein the communication device captured, using a camera, an image of the receipt, and wherein the communication device identified the total transaction amount and the tax amount is based on the image of the receipt.

Embodiment 15 The method of embodiment 13, further comprising receiving, by the issuer computer, a transaction identifier for the transaction from the communication device, wherein the communication device received a selection of the transaction and identified the transaction identifier for the transaction, wherein the associating is based on the transaction identifier.

Embodiment 16 The method of embodiment 13, wherein the communication device receives confirmation of the tax amount from a user of the communication device via a user interface, and wherein the receiving of the total transaction amount and the tax amount is based on the communication device receiving the confirmation.

Embodiment 17 The method of embodiment 13, further comprising transmitting, by the issuer computer, the record of the transaction and the tax amount to the communication device, the tax amount being associated with the record of the transaction.

Embodiment 18 The method of embodiment 13, further comprising generating, by the issuer computer, an accounting statement based on the tax amount.

Embodiment 19 An issuer computer, comprising:
a processor circuit; and
a memory unit coupled to the processor circuit and storing computer readable code that, when executed by the processor circuit, causes the processor circuit to:
   store a record of a transaction conducted using the account,
   receive a total transaction amount and a tax amount for the transaction from a communication device, wherein the communication device identified the total transaction amount and the tax amount from a receipt, and
   associate the tax amount with the record of the transaction.

Embodiment 20 The computer of embodiment 19, wherein the code, when executed by the processor circuit, further cause the processor circuit to receive a transaction identifier for the transaction from the communication device, wherein the communication device received a selection of the transaction and identified the transaction identifier for the transaction, and wherein the association of the tax amount with the record of the transaction is based on the transaction identifier.

Embodiment 21 The computer of embodiment 19, wherein the code, when executed by the processor circuit, further cause the processor circuit to transmit the record of the transaction and the tax amount to the communication device, the tax amount being associated with the record of the transaction.

Embodiment 22 The computer of embodiment 19, wherein the code, when executed by the processor circuit, further cause the processor circuit to generate an accounting statement based on the tax amount.

## Claims

1. A method, comprising:
obtaining, by a communication device, a receipt;
identifying, by the communication device, a total transaction amount and a tax amount for a transaction conducted using an account from the receipt; and
transmitting, by the communication device, the total transaction amount and the tax amount to an issuer computer of an issuer of the account, wherein the issuer computer associates the tax amount with a record of the transaction stored at the issuer computer.

2. The method of claim 1, wherein obtaining the receipt comprises capturing, using a camera, an image of the receipt, wherein the obtained receipt comprises the image of the receipt, and wherein the identifying of the total transaction amount and the tax amount is based on the image of the receipt.

3. The method of claim 1, further comprising:
receiving, by the communication device, a selection of the transaction;
identifying, by the communication device, a transaction identifier for the transaction; and
transmitting, by the communication device, the transaction identifier to the issuer computer, wherein the issuer computer associates the tax amount with the record of the transaction based on the transaction identifier.

4. The method of claim 1,
further comprising receiving, by the communication device, confirmation of the tax amount from a user of the communication device via a user interface, wherein the transmitting of the total transaction amount and the tax amount is based on the receiving of the confirmation.

5. The method of claim 1,
further comprising receiving, by the communication device, the record of the transaction and the tax amount from the issuer computer, the tax amount being associated with the record of the transaction.

6. The method of claim 1,
wherein the issuer computer generates an accounting statement based on the tax amount.

7. A communication device, comprising,
a processor circuit; and
a memory unit coupled to the processor circuit and storing computer readable code that, when executed by the processor circuit, causes the processor circuit to implement a method according to any of claims 1-6.

8. A method, comprising:
storing, by an issuer computer of an issuer of an account, a record of a transaction conducted using the account;
receiving, by the issuer computer, a total transaction amount and a tax amount for the transaction from a communication device, wherein the communication device identified the total transaction amount and the tax amount from a receipt; and
associating, by the issuer computer, the tax amount with the record of the transaction.

9. The method of claim 13,
wherein the communication device captured, using a camera, an image of the receipt, and wherein the communication device identified the total transaction amount and the tax amount is based on the image of the receipt.

10. The method of claim 13,
further comprising receiving, by the issuer computer, a transaction identifier for the transaction from the communication device, wherein the communication device received a selection of the transaction and identified the transaction identifier for the transaction, wherein the associating is based on the transaction identifier.

11. The method of claim 13,
wherein the communication device receives confirmation of the tax amount from a user of the communication device via a user interface, and wherein the receiving of the total transaction amount and the tax amount is based on the communication device receiving the confirmation.

12. The method of claim 13,
further comprising transmitting, by the issuer computer, the record of the transaction and the tax amount to the communication device, the tax amount being associated with the record of the transaction.

13. The method of claim 13,
further comprising generating, by the issuer computer, an accounting statement based on the tax amount.

14. An issuer computer, comprising:
a processor circuit; and
a memory unit coupled to the processor circuit and storing computer readable code that, when executed by the processor circuit, causes the processor circuit to implement a method according to any of claims 8-13.
